# EUROPÄISCHE PATENTSCHRIFT

(11) **EP 0 905 152 B1**
(45) Veröffentlichungstag und Bekanntmachung des Hinweises auf die Patenterteilung: **01.03.2006**
(21) Anmeldenummer: 98117666.2
(22) Anmeldetag: 17.09.1998
(51) Int. Cl.: C08F 210/16, C08F 2/14, C08F 6/24

(54) **Polyolefin-Suspensionspolymerisation**
Suspension polymerisation of polyolefin
Polymérisation en suspension de polyoléfine

(30) Priorität: 26.09.1997 DE 19742507
(43) Veröffentlichungstag der Anmeldung: 31.03.1999
(73) Patentinhaber: Basell Polyolefine GmbH, 50389 Wesseling (DE)
(72) Erfinder: Schöneborn, Paul-Richard, Dr., 65830 Kriftel (DE); Berthold, Joachim, Dr., 65779 Kelkheim (DE); Enderle, Johannes Friederich, Dr., 60318 Frankfurt (DE); Böhm, Ludwig, Prof., 65795 Hattersheim (DE); Münnig, Rainer, 65510 Idstein (DE)

(56) Entgegenhaltungen:
- DATABASE WPI Section Ch, Week 9731 Derwent Publications Ltd., London, GB; Class A17, AN 97-337077 XP002089173 & JP 09 136905 A (ASAHI KASEI KOGYO KK) , 27. Mai 1997

## Beschreibung

Die Erfindung betrifft ein Olefinpolymerisationsverfahren zur Herstellung von Ethylencopolymeren durch Polymerisation von Ethylen mit bis zu 10 Gew.-%, bezogen auf die Gesamtmenge der Monomeren, eines 1-Olefins der Formel R-CH=CH₂ als Comonomer, worin R ein geradkettiger oder verzweigter Alkylrest mit 1 bis 4 C-Atomen bedeutet, in einem Polymerisationsreaktor und in Suspension mit einem Dispergiermittel bei einer Temperatur von 20 bis 100°C und einem Druck von 2 bis 20 bar in Gegenwart eines Katalysators mit anschließender Trennung des Dispergiermittels von dem Polymeren, mit vermindertem Wachsanfall, bei dem ein selektiver Wachsniederschlag auf das Polymerisat zu verbesserter Ausbeute führt.

Bei der Olefin-Polymerisation als einer Aufbaureaktion werden - beginnend mit dem Monomeren über oligomere Verbindungen - schließlich die hochmolekularen Polyolefine gebildet. Die Art der Reaktion führt stets zu einer Molekulargewichtsverteilung, die, wenn auch in geringem Maße, niedermolekulare Bestandteile, d.h. oligomere Verbindungen bis zu einer Kettenlänge von 60 C-Atomen, umfaßt.

Es ist bekannt , daß diese "Wachsbestandteile" in Polymerisationsprozessen, die in der Gasphase durchgeführt werden, auf dem körnigen Polymerprodukt verbleiben. Bei Polymerisationsprozessen, die dagegen in einem Dispergiermittel ausgeführt werden, wird jedoch ein Teil der niedermolekularen Polymerverbindungen im Dispergiermittel gelöst.

Suspensionspolymerisation-Verfahren werden mit einem sogenannten "Schwersieder" als Dispergiermittel betrieben. Gebräuchliche Dispergiermittel sind Benzinschnitte mit einer Siedetemperatur von über 60°C (bei 1 bar) wie Hexan, Isooktan, Nonan usw. Bei dem Suspensionspolymerisationsverfahren wird das Polymere von dem Dispergiermittel im Anschluß an die Polymerisationsreaktion mechanisch abgetrennt. Ein Teil oder die gesamte Dispergiermittelmenge wird in die Polymerisationsreaktoren zurückgeführt. Der Teil des Dispergiermittels, der gegebenenfalls nicht in die Reaktoren zurückgeführt wird, wird im allgemeinen destillativ aufgearbeitet. Hierbei fallen die gelösten Wachsbestandteile als ein pastöser bis fester Rückstand an, der entsorgt werden muß.

Es gibt jedoch auch Verfahrensvarianten, bei denen das durch Destillation des Dispergiermittels abgetrennte Wachs im weiteren Verfahrensablauf z.B. auf das Produkt aufgesprüht und zusammen mit diesem verwertet wird. Diese Maßnahme wirkt sich jedoch, insbesondere für hochwertige Produkte, verarbeitungs- und qualitätsmindernd aus.

JP 9 136 905 beschreibtein mehrstufiges Polymerisationverfahren mit einem Lösungsmittel, das nach Recycling in Verfahren wieder eingesetzt wird.

Erschwerend kommt hinzu, daß sich bei kontinuierlich durchgeführten Polymerisationen bestimmte Produkttypen der Polyolefine nur mit zwei in Reihe geschalteten Reaktoren, in denen unterschiedliche Reaktionsbedingungen eingestellt werden, herstellen lassen. Im zweiten Reaktor wird im allgemeinen die comonomerreiche Reaktion durchgeführt. Die Art der Verschaltung der Apparatur und die Anforderungen der Rezeptur zwingen dazu, einen hohen Anteil an Dispergiermittel aus dem Polymerisationsprozeß auszuschleusen und destillativ aufzuarbeiten. Dabei fällt mitunter eine beträchtliche Menge an Wachs an, die bis zu 3 Gew. % der Einsatzstoffe betragen kann.

Das ausgeschleuste Wachs enthält u.a. Polymermoleküle mit Kettenlängen über C-24, vorzugsweise über C-30 und insbesondere über C-40, die ohne Qualitätseinbuße mit dem hochmolekularen Polymeren in nachfolgenden Einsatzgebieten verarbeitet werden können. Als nachteilig für den Verarbeitungsprozeß erweisen sich jedoch solche oligomeren Verbindungen mit einer Kettenlänge bis C-24.

Die Aufgabe der Erfindung besteht darin, ein Verfahren zur Abtrennung dieser Oligomere bis zu einer Kettenlänge von 24 C-Atomen zu finden.

Die Erfindung betrifft ein Verfahren der eingangs genannten Gattung,dessen Kennzeichnungsmerkmal darin zu sehen ist, daß nach durchgeführter Polymerisation vor Abtrennung des Dispergiermittels vom Polymeren eine partielle Verdampfung des Suspensionsstromes vorgenommen wird, wodurch ein Teil des bei der Polymerisation gebildeten Wachses auf das Polymere aufzieht, und der dabei gebildete Brüdenstrom nach Kondensation direkt in die Reaktoren oder nach destillativer Abtrennung des Comonomeren wieder in das Verfahren eingeschleust wird.

Überraschenderweise hat sich bei dem Verfahren gemäß der Erfindung gezeigt, daß der Anteil des erzeugten Wachses, der zwar durch das Dispergiermittel gelöst wird, aber nicht für die Qualitätsminderung verantwortlich ist, auf das Polymere aufzieht und dadurch die Ausbeute des Verfahrens erhöht sowie die Entsorgung von Wachs verringert wird.

Der aufgezogene Wachsanteil besteht im allgemeinen aus Oligomeren über C-24, vorzugsweise aber aus Oligomeren über C-30 und insbesondere über C-40.

Bei der partiellen Verdampfung wird im allgemeinen 1/5 bis 1/2, vorzugsweise 1/4 bis 1/3 des im Verfahren eingesetzten Dispergiermittels dampfförmig im Brüdenstrom abgezogen.

Vorzugsweise wird die Verdampfung unter vermindertem Druck vorgenommen. Hierbei beträgt der Druck 0,1 bis 0,8 bar, insbesondere 0,3 bis 0,5 bar.

Bei der Polymerisation gemäß der Erfindung wird ein Anteil bis zu 10 Gew.-%, bezogen auf die Gesamtmenge der Monomeren, eines 1-Olefins der Formel R-CH=CH₂ als Comonomer, worin R ein geradkettiger oder verzweigter Alkylrest mit 1 bis 4 C-Atomen bedeutet, eingesetzt. Vorzugsweise eignen sich Butan, Penten, Hexen, 4-Methyl-1-penten.

Zu Beginn der Polymerisation, d.h. im ersten Reaktor, ist darauf zu achten, daß eine mögliche Comonomerkonzentration, die gegebenenfalls durch regeneriertes Dispergiermittel in den Reaktor gelangt, bei einem Druck von 8 bar und einer Temperatur von 80°C den Wert von 0,04 Gew.-% nicht übersteigt, um eine Verschlechterung der Eigenschaften des Endproduktes zu vermeiden. Im allgemeinen beträgt die Comonomerkonzentration 0 bis 0,04 Gew.-%, vorzugsweise 0 bis 0,03 Gew.-%.

Das Verfahren gemäß der Erfindung trägt zur erhöhten Wirtschaftlichkeit für das Polymerisationsverfahren für Polyolefine und zur Entlastung der Umwelt durch geringere Entsorgungsmengen von Wachs bei. Da auch die Entsorgung erhebliche Kosten verursacht, wird die Wirtschaftlichkeit durch den Anfall geringerer Mengen an Wachs weiter erhöht.

Als Dispergiermittel werden bei dem Verfahren gemäß der Erfindung Schnitte einer Fraktion aus gesättigten Kohlenwasserstoffen mit einer Siedetemperatur (bei 1 bar) von über 60°C eingesetzt. Beispiele hierfür sind Hexan, Isooktan, Nonan und andere.

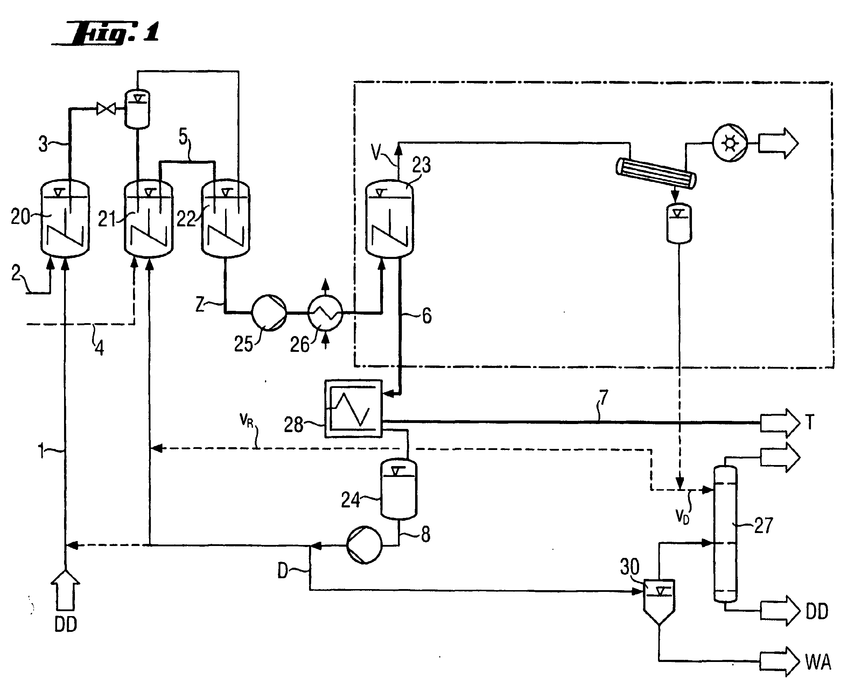

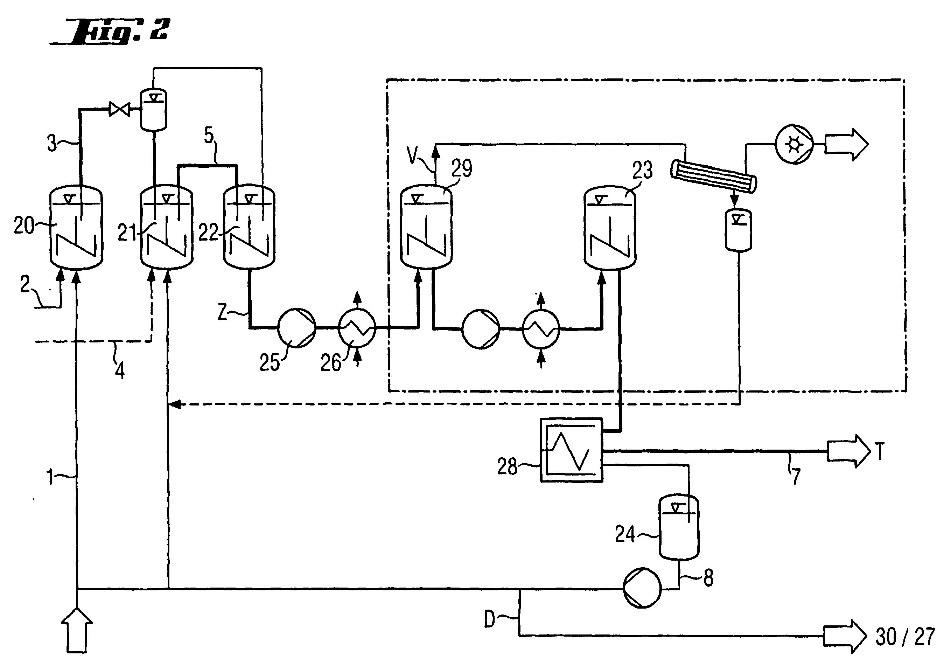

Das Verfahren gemäß der Erfindung wird im folgenden anhand der Figuren 1 und 2 näher erläutert.

Figur 1 gibt ein Fließschema des erfindungsgemäßen Suspensionspolymerisationsverfahrens mit dem "schwersiedenden" Dispergiermittel Hexan und Buten als Comonomer wieder.

Figur 2 gibt das Fließschema des Suspensionspolymerisationsverfahrens mit dem Dispergiermittel Isooktan wieder.

Das Monomere Ethylen und Wasserstoff werden über Leitung 2, das Dispergiermittel über Leitung 1 dem ersten Reaktor 20 zugeführt. Um einen Abfall der Spannungsrißfestigkeit des Endproduktes zu vermeiden, darf die Butenkonzentration bei einem Druck von 8 bar und einer Temperatur von 80°C einen Grenzwert von 0,04 Gew.-% nicht übersteigen. Sie liegt im allgemeinen bei 0 bis 0,04 Gew.-%, vorzugsweise bis 0,03 Gew.-%. Um diesen rezepturbedingten Grenzwert für die Butenkonzentration im ersten Reaktor 20 einhalten zu können, wird regeneriertes Dispergiermittel (DD) in den ersten Reaktor 20 eingeleitet. Durch die Butenreduzierung des Dispergiermittles (DD) bei der partiellen Verdampfung in der Vorlage 23 kann wachshaltige Mutterlauge aus dem Sammelgefäß 24 direkt in den ersten Reaktor 20 geleitet werden.

Aus dem ersten Reaktor 20 gelangt das Reaktionsgemisch über Leitung 3 in den zweiten Reaktor 21, wo die Polymerisation in einem butenreichen Dispergiermittel weitergeführt wird.

Das Buten kann über Leitung 4 frisch und/oder in Form von rezirkulierter, buten- und wachshaltiger Mutterlauge aus dem Sammelgefäß 24 dem zweiten Reaktor 21 zugeführt werden, wobei auf die rezepturbedingte Butenkonzentration zu achten ist.

Auch das eingesetzte Dispergiermittel des ersten Reaktors 20 kann aus wiedergewonnenem Hexan bestehen, das gegebenenfalls noch Buten enthalten kann. Auch hier ist der Butengehalt beim Einschleusen in den ersten Reaktor 20 zu beachten.

Das für die Polymerisation im zweiten Reaktor 21 benötigte Buten wird mit der Mutterlauge aus dem Sammelgefäß 24 oder in Form eines wachsfreien, butenreichen Dispergiermittelkondensats aus dem Brüden (V) der Dekantervorlage 23 oder frisch über Leitung 4 geliefert. Über Leitung 5, den Nachreaktor 22, in dem ein Druck von 1,5 bar und eine Temperatur von 60°C herrschen, eine Pumpe 25 und einen Wärmetauscher 26 gelangt der Suspensionsstrom (Z), bestehend aus festem Polymeren, Dispergiermittel mit darin gelösten, nicht umgesetzten Monomeren und Wachs in die Dekantervorlage 23, wo der selektive Wachsniederschlag auf das Polymere durch partielle Verdampfung bei vermindertem Druck von 0,32 bar und einer Temperatur von 35°C stattfindet.

Dies kann adiabatisch unter Ausnutzung der latenten Wärme des Suspensionstromes durchgeführt werden. Hierbei verdampfen die "leichtsiedenden" Monomere und ein Teil des Dispergiermittels. Der resultierende Brüdenstrom (V) ist wachsfrei und comonomerreich.

Durch die Einengung des Dispergiermittels bei gleichzeitiger Abkühlung in der Dekantervorlage 23 werden die gelösten höhermolekularen Wachsanteile gefällt, wobei die Kohlenwasserstoffe mit einer Kettenlänge über C-24, vorzugsweise über C-30 und insbesondere über C-40 auf das feste Polymere aufgezogen werden.

Über Leitung 6 gelangt der Suspensionstrom aus der Dekantervorlage 23 in den Dekanter 28 und wird in Mutterlauge und Polymeres getrennt. Das dekanterfeuchte Polymere, das nach Abtrennung der Mutterlauge noch eine Restfeuchte von 20 bis 30 Gew.-% aufweist, wird über Leitung 7 zu dem nicht mehr dargestellten Trockner T geführt und nach Stabilisierung zu Pellets granuliert.

Das abgetrennte Dispergiermittel (Mutterlauge) ist an Comonomeren verarmt; es wird in den Polymerisationsprozeß über Leitung 8 rezirkuliert. Ein kleiner Strom (D), in der Größenordnung von 5 bis 12 % bezogen auf den Strom (Z), wachshaltigen Dispergiermittels wird in dem Verdampfer 30 destillativ aufgearbeitet, wobei alle gelösten Wachsverbindungen (WA) entfernt werden. Hierdurch wird der Pegel an niedermolekularen Wachsanteilen (z.B. Moleküle mit einer Kettenlänge unter C-24) im Dispergiermitteldestillat (DD) begrenzt. Die Rückführung der Brüden (Strom V) in das Verfahren kann zum Teil oder auch vollständig in den zweiten Reaktor 21 (Strom V_{R}) zurückgeführt werden. Im Falle einer Teilrückführung wird der restliche Strom (V_{D}) der Dispergiermittel-Destillationskolonne 27 zwecks Butenabtrennung zugeführt.

Durch dieses Verfahren wird eine höhere Rückführung wachshaltigen Dispergiermittels in die Polymerisationsreaktoren 20 und 21 bei gleichzeitiger Einhaltung der für die kontinuierliche Produktion von bimodalen Polyethylencopolymeren erforderlichen Reaktionsbedingungen erzielt.

In Figur 2 entsprechen die Polymerisationsbedingungen in den Reaktoren 20, 21 und 22 denen in der Figur 1. Die Einengung des Suspensionsstromes (Z) hinsichtlich des Dispergiermittels Isooktan wird in Rührbehälter 29 bei vermindertem Druck von ca. 0,32 bar und einer nur geringfügig von der Reaktionstemperatur abweichenden, höheren Temperatur als für das Dispergiermittel Hexan von ca. 70°C vorgenommen, die durch den Wärmetauscher 26 eingestellt wird. Der kondensierte wachsfreie, butenhaltige Brüdenstrom (Strom V) wird in den zweiten Reaktor 21 eingeleitet. Der nach Abkühlung auf 35°C in der Dekantervorlage 23 und Durchführung der mechanischen Flüssigkeitsabtrennung in Dekanter 28 vorliegende Dispergiermittelmassenstrom wird bis auf einen Anteil (D) von 5 bis 12 Gew. %, bezogen auf den Strom (Z) des Nachreaktors 22, in den ersten und zweiten Reaktor (20 und 21) zurückgeführt. Weitere Trennungen erfolgen wie in Figur 1.

Zur Gewinnung eines entsprechenden Brüdenstromes (V) wird dem Flashvorgang Wärme im Wärmetauscher 26 zugeführt.

### Beispiele

In Tabelle 1 sind die Betriebsdaten einer kontinuierlich betriebenen Polymerisationsanlage mit einem Durchsatz von 50 kg/h wiedergegeben. Das Dispergiermittel ist Hexan. Beim Betrieb der Anlage ohne verminderten Druck (Beispiel 2) findet keine partielle Verdampfung statt (Strom V=0); dies wird als Vergleichsbeispiel zum Gegenstand der Erfindung (Beispiel 1) angesehen.

**Tabelle 1**

| | Beispiel 1 | Beispiel 2 (Vergleich) |
|---|---|---|
| C₂H₄-Eingas [kg/h] | 50 | 50 |
| H₂-Eingas [Nl/h] | 465 | 450 |
| C₄H₈-Eingas [g/h] | 1500 | 1950 |
| Dispergiermittel [l/h] (Strom Z) | 250 | 250 |
| | | |

| Dekantervorlage 23 | | |
|---|---|---|
| Druck [mbar] | 340 | 1030 |
| Temperatur [°C] | 34 | 62 |
| kond. Brüden [l/h] | 102 | 0 |
| Phasenverhältnis [kg PE/I Dpm*] | 1:3 | 1:5 |
| (Ablauf Dekantervorlage) | | |
| C₄H₈-Konz. Brüden [Gew.-%] | 2,3 | - |
| C₄H₈-Konz. [Gew.-%] (Strom 6) | 0,2 | 0,75 |
| | | |
| ausgeschleuste Wachsmenge [g/h] | 469 | 675 |
| Wachsgehalt im Dpm* [Gew.-%] (Strom 6) | 1,0 | 1,4 |

| | | |
|---|---|---|
| *Dispergiermittel | | |

In Tabelle 2 sind die Produkteigenschaften der Polymere aus den Beispielen 1 und 2 (Vergleich) wiedergegeben.

**Tabelle 2**

| | Beispiel 1 | Beispiel 2 (Vergleich) |
|---|---|---|
| Schmelzindex | | |
| MFR 190/5 g/10 min (Iso 1133) | 0,42 | 0,47 |
| FRR* | 25,8 | 23,5 |
| Viskosität (ISO 1191) [ml/g] | 320 | 314 |
| Dichte (DIN 53479, ASTM D1505) [g/cm³] | 0,950 | 0,951 |
| | | |

| Kerbschlagzähigkeit | | |
|---|---|---|
| Charpy (ISO 179/1 eA) [kJ/mm²] | 17,4 | 15,7 |
| | | |

| Wachsgehalt bei | | |
|---|---|---|
| C7-Extraktion [Gew.-%] | 7,5 | 4,5 |
| C6-Extraktion [Gew.-%] | 1,3 | 1,0 |
| TGA** 150°C, 1 h [ppm] | 4030 | 5370 |
| flüchtige Bestandteile [mg/8 kg] | 29 | 30 |

| | | |
|---|---|---|
| *Verhältnis Schmelzindex 190/21,6 g/10 min zu 190/5 g/10 min | | |
| **TGA Thermo-Gravimetric-Analyse (ISO 11358) | | |

Die Selektivität des Wachsaufzugs und die damit verbundenen Verarbeitungsvorteile gibt die Tabelle 3 wieder.

Beispiel 3 gibt die Eigenschaften eines Ethylencopolymeren wieder, bei dem durch die der Erfindung zugrundeliegende Maßnahme ein höherer Anteil von dem im Dispergiermittel gelösten Wachs auf das feste Polyethylencopolymere in der Dekantervorlage 23 aufgezogen wurde.

Beispiel 4 hält die Eigenschaften eines Ethylencopolymeren fest, bei dem die im Polymerisationsprozeß produzierte und im Dispergiermittel gelöste Wachsmenge anschließend vollständig wieder auf das Produkt aufgesprüht wurde (Vergleich).

**Tabelle 3**

| | Beispiel 3 | Beispiel 4 (Vergleich) |
|---|---|---|
| Dekantervorlage 23 | | |
| Druck [mbar] | 340 | 1030 |
| kond. Brüden [l/h] | 102 | 0 |
| Phasenverhältnis [kg PE/I Dpm] (Strom 6) | 1:3 | 1:5 |
| flüchtige Bestandteile [mg/8 kg] | 29 | 56 |
| Verarbeitung | ohne Qualm | mit Qualm |

### Meßapparatur für flüchtige Bestandteile

Da für die Messung der flüchtigen Bestandteile keine Normvorschrift existiert, wird die Prüfmethode nachstehend beschrieben.

8 kg Polyethylengranulat werden zu einem Schlauch mit einem Durchmesser von rund 45 mm extrudiert, der durch die Öffnung einer gekühlten Grundplatte (Außendurchmesser 184 mm, Innendurchmesser 50 mm, Kühlfläche 246 cm²) geführt wird. Die Grundplatte wird seitlich durch ein 250 mm zylindrisches Leitblech abgeschirmt, so daß die Grundplatte und das Leitblech einen halboffenen Raum bilden. Der von dem extrudierten Schlauch austretende Qualm wird an einem gekühlten, an der Grundplatte befestigten Fotoblech kondensiert. Diese niedergeschlagene Masse auf dem abnehmbaren Fotoblech wird gewogen und dient als quantitatives Maß für die Qualmbildung.

| | |
|---|---|
| Kühlwassertemperatur | 7 bis 10°C |
| Massetemperatur Extrusion | 225 bis 229°C |

## Patentansprüche

1. Verfahren zur Herstellung von Ethylencopolymeren durch Polymerisation von Ethylen mit bis zu 10 Gew.-%, bezogen auf die Gesamtmenge der Monomeren, eines 1-Olefins der Formel R-CH=CH₂ als Comonomer, worin R ein geradkettiger oder verzweigter Alkylrest mit 1 bis 4 C-Atomen bedeutet, in einem Polymerisationsreaktor und in Suspension mit einem Dispergiermittel bei einer Temperatur von 20 bis 100°C und einem Druck von 2 bis 20 bar in Gegenwart eines Katalysators mit anschließender Trennung des Dispergiermittels von dem Polymeren, **dadurch gekennzeichnet, daß** nach durchgeführter Polymerisation vor Abtrennung des Dispergiermittels vom Polymeren eine partielle Verdampfung des Suspensionsstromes vorgenommen wird, wodurch ein Teil des bei der Polymerisation gebildeten Wachses auf das Polymere aufzieht, und der dabei gebildete Brüdenstrom nach Kondensation direkt in den Reaktor oder nach destillativer Abtrennung des Comonomeren wieder in das Verfahren eingeschleust wird.

2. Verfahren nach Anspruch 1, **dadurch gekennzeichnet, daß** das Verfahren kontinuierlich betrieben und in mindestens zwei Reaktionsstufen mit jeweils mindestens einem Reaktor durchgeführt wird.

3. Verfahren nach Anspruch 1 oder 2, **dadurch gekennzeichnet, daß** das aufgezogene Wachs aus Oligomeren über C-24, vorzugsweise über C-30 und insbesondere über C-40, besteht.

4. Verfahren nach einem oder mehreren der Ansprüche 1 bis 3, **dadurch gekennzeichnet, daß** bei der partiellen Verdampfung 1/5 bis 1/2, vorzugsweise 1/4 bis 1/3, des Dispergiermittels dampfförmig abgezogen wird.

5. Verfahren nach Anspruch 4, **dadurch gekennzeichnet, daß** die Verdampfung vorzugsweise unter vermindertem Druck erfolgt, wobei der Druck bei der Verdampfung 0,1 bis 0,8 bar, insbesondere 0,3 bis 0,5 bar, beträgt.

6. Verfahren nach einem oder mehreren der Ansprüche 1 bis 5, **dadurch gekennzeichnet, daß** die partielle Verdampfung adiabatisch unter Ausnutzung der latenten Wärme des Suspensionsstromes oder durch Zuführung von Wärme vorgenommen wird.

7. Verfahren nach einem oder mehreren der Ansprüche 1 bis 6, **dadurch gekennzeichnet, daß** der Brüdenstrom mit den darin enthaltenen Monomeren und Comonomeren entweder vollständig oder teilweise in den zweiten Reaktor eines aus zwei Reaktionsstufen bestehenden Verfahrens zugeführt wird.

8. Verfahren nach Anspruch 7, **dadurch gekennzeichnet, daß** bei teilweiser Rückführung der restliche Brüdenstrom einer Dispergiermitteldestillation unterworfen wird.

9. Verfahren nach einem oder mehreren der Ansprüche 1 bis 8, **dadurch gekennzeichnet, daß** die Comonomerkonzentration im ersten Reaktor einer aus mindestens zwei Reaktionsstufen bestehenden Anlage auf 0 bis 0,04 Gew.-%, vorzugsweise auf 0 bis 0,03 Gew.-%, eingestellt wird, wobei als Comonomer vorzugsweise 1-Buten eingesetzt wird.

10. Verfahren nach einem oder mehreren der Ansprüche 1 bis 9, **dadurch gekennzeichnet, daß** als Dispergiermittel gesättigte Kohlenwasserstoffe mit einer Siedetemperatur (bei 1 bar) von über 60°C eingesetzt werden, vorzugsweise Hexan, Isooktan oder Nonan.

## Claims

1. A process for preparing ethylene copolymers by polymerizing ethylene with, as comonomer, up to 10% by weight, based on the total amount of the monomers, of a 1-olefin of the formula R-CH=CH₂, where R is a straight-chain or branched alkyl radical having from 1 to 4 carbon atoms, in a polymerization reactor and in suspension with a dispersion medium at a temperature of from 20 to 100°C and a pressure of from 2 to 20 bar, in the presence of a catalyst, followed by separation of the dispersion medium from the polymer, which comprises, after carrying out the polymerization and before removing the dispersion medium from the polymer, partly evaporating the suspension stream, with the result that some portion of the wax formed in the polymerization is adsorbed onto the polymer, and feeding the resultant vapor stream directly into the reactors after condensation or back into the process after distillative removal of the comonomer.

2. The process as claimed in claim 1, wherein the process is operated continuously and is carried out in at least two reaction steps with at least one reactor in each.

3. The process as claimed in claim 1 or 2, wherein the adsorbed wax is composed of oligomers above C-24, preferably above C-30 and in particular above C-40.

4. The process as claimed in one or more of claims 1 to 3, wherein, during the partial evaporation, from 1/5 to 1/2 of the dispersion medium, preferably from 1/4 to 1/3 of the dispersion medium, is drawn off as vapor.

5. The process as claimed in claim 4, wherein the evaporation preferably takes place at reduced pressure, and the pressure during the evaporation is from 0.1 to 0.8 bar, in particular from 0.3 to 0.5 bar.

6. The process as claimed in one or more of claims 1 to 5, wherein the partial evaporation is undertaken adiabatically utilizing the latent heat of the suspension stream or by introducing heat.

7. The process as claimed in one or more of claims 1 to 6, wherein all or some of the vapor stream, with the monomers and comonomers present therein, is fed into the second reactor of a process composed of two reaction steps.

8. The process as claimed in claim 7, wherein, in the case of partial return, the remainder of the vapor stream undergoes a distillation of dispersion medium.

9. The process as claimed in one or more of claims 1 to 8, wherein the comonomer concentration in the first reactor of a system composed of at least two reaction steps is set at from 0 to 0.04% by weight, preferably at from 0 to 0.03% by weight, preferably with the use of 1-butene as comonomer.

10. The process as claimed in one or more of claims 1 to 9, wherein the dispersion media used are saturated hydrocarbons with a boiling point (at 1 bar) of above 60°C, preferably hexane, isooctane or nonane.

## Revendications

1. Procédé de fabrication de copolymères d'éthylène par polymérisation de l'éthylène avec jusqu'à 10 % en poids, par rapport à la quantité totale de monomères, d'une 1-oléfine de formule R-CH=CH₂ à titre de comonomère, où R représente un radical alkyle linéaire ou ramifié ayant de 1 à 4 atomes de C, dans un réacteur de polymérisation et en suspension avec un agent dispersant à une température de 20 à 100°C et une pression de 2 à 20 bars en présence d'un catalyseur, avec séparation consécutive de l'agent dispersant vis à vis du polymère, **caractérisé en ce que**, une fois la polymérisation réalisée et avant séparation de l'agent dispersant vis à vis du polymère, on procède à une évaporation partielle du courant de suspension, moyennant quoi une partie de la cire formée lors de la polymérisation revêt le polymère et le courant vapeur alors formé est introduit directement dans le réacteur après condensation ou est réintroduit dans le procédé après séparation par distillation du comonomère.

2. Procédé selon la revendication 1, **caractérisé en ce que** le procédé est réalisé en continu et en au moins deux étapes réactionnelles avec à chaque fois au moins un réacteur.

3. Procédé selon la revendication 1 ou 2, **caractérisé en ce que** la cire revêtue se compose d'oligomères supérieurs à C₂₄, de préférence supérieurs à C₃₀ et en particulier supérieurs à C₄₀.

4. Procédé selon l'une ou plusieurs des revendications 1 à 3, **caractérisé en ce que**, lors de l'évaporation partielle, on retire 1/5 à 1/2, de préférence 1/4 à 1/3 de l'agent dispersant sous forme de vapeur.

5. Procédé selon la revendication 4, **caractérisé en ce que** l'évaporation s'effectue de préférence sous pression réduite, la pression atteignant 0,1 à 0,8 bar, en particulier 0,3 à 0,5 bar lors de l'évaporation.

6. Procédé selon l'une ou plusieurs des revendications 1 à 5, **caractérisé en ce que** l'évaporation partielle est effectuée adiabatiquement en utilisant la chaleur latente du courant de suspension ou en ajoutant de la chaleur.

7. Procédé selon l'une ou plusieurs des revendications 1 à 6, **caractérisé en ce que** le courant frère, contenant les monomères et comonomères, est entièrement ou partiellement amené au deuxième réacteur d'un procédé se composant de deux étapes de réaction.

8. Procédé selon la revendication 7, **caractérisé en ce que** le courant vapeur résiduel est soumis à une distillation de l'agent dispersant en cas de réintroduction partielle.

9. Procédé selon l'une ou plusieurs des revendications 1 à 8, **caractérisé en ce que** la concentration en comonomère dans le premier réacteur d'une installation se composant au moins de deux étapes de réaction est ajustée de 0 à 0,04 % en poids, de préférence de 0 à 0,03 % en poids, le 1-butène étant de préférence mis en oeuvre à titre de comonomère.

10. Procédé selon l'une ou plusieurs des revendications 1 à 9, **caractérisé en ce que** l'on met en oeuvre, à titre d'agent dispersant, des hydrocarbures saturés ayant une température d'ébullition (à 1 bar) de plus de 60°C, de préférence de l'hexane, de l'iso-octane ou du nonane.
